(19) Europäisches Patentamt
European Patent Office
Office européen des brevets

(11) Veröffentlichungsnummer: **0 010 087**
**B1**

(12) # EUROPÄISCHE PATENTSCHRIFT

(45) Veröffentlichungstag der Patentschrift: **10.02.82**

(51) Int. Cl.[3]: **C 08 G 18/16**

(21) Anmeldenummer: **78900124.5**

(22) Anmeldetag: **07.08.78**

(86) Internationale Anmeldenummer:
**PCT/EP78/00006**

(87) Internationale Veröffentlichungsnummer:
**WO 79/00154 05.04.79 Gazette 79/7**

(54) **Verfahren zur katalytischen Aushärtung von Polyurethanformmassen.**

(30) Priorität: **20.09.77 SE 7710502**

(43) Veröffentlichungstag der Anmeldung:
**30.04.80 Patentblatt 80/9**

(45) Bekanntmachung des Hinweises auf die Patenterteilung:
**10.02.82 Patentblatt 82/6**

(84) Benannte Vertragsstaaten:
**CH DE FR GB LU SE**

(56) Entgegenhaltungen:
**FR - A - 2 202 118**

(73) Patentinhaber: **Gambro Dialysatoren K.G.
Ermelesstrasse 76
D-7450 Hechingen (DE)**

(72) Erfinder: **LEHMANN, Hans-Dieter
Hornweg 12
D-8963 Waltenhofen 2 (DE)**

(74) Vertreter: **Weber, Dieter, Dr. et al,
Patentanwälte Dr. D. Weber und Dipl.-Phys. K. Seiffert Gustav-Freytag-Strasse 25
D-6200 Wiesbaden 1 (DE)**

**EP 0 010 087 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur katalytischen Aushärtung von Polyurethanformmassen

Technisches Gebiet

Polyurethanformmassen, wie Polyurethangießmassen, werden durch Polyaddition von Diisocyanaten mit Polyolen bzw. aus Vorpolymeren mit entsprechenden Endgruppen hergestellt. Damit derartige Formassen in wirtschaftlich vertretbaren Zeiträumen vom flüssigen in den festen Zustand übergehen und aushärten, ist est üblich, Katalysatoren zuzusetzen.

Polyurethanformmassen, wie Giessmassen, werden in der Medizintechnik verwendet, wie beispielsweise für die Herstellung von Dialyse- und Diafiltrationseinrichtungen zur Behandlung von Blut und Blutflüssigkeiten. Da diese dem Blutkreislauf nach der Dialyse bzw. Diafiltration wieder zugeführt werden, ist es erforderlich, daß alle Komponenten von Giessmassen, die mit dem Blut oder Blutflüssigkeiten in Berührung kommen, physiologisch unbedenklich und völlig ungiftig sind.

Aus diesem Grund lassen sich in der Medizintechnik Polyurethanformmassen mit vielen bekannten Katalysatoren nicht härten, da diese entweder aus toxikologischen Gründen vermieden werden müssen und/oder da sie andere Nachteile besitzen. So sind organische Zinnverbindungen und tertiäre Amine aus toxikologischen Gründen nicht unbedenklich, und letztere haben den zusätzlichen Nachteil, daß sie bei vielen Systemen zur Blasenbildung führen, insbesondere wenn nicht unter vollständigem Ausschlaß von Feuchtigkeit gearbeitet wird. Andere bekannte, insbesondere salzartige Katalysatoren sind in der Polyolkomponente nur begrenzt löslich und als Festsubstanz schwer dosierbar. Beim Lösen in der Diisocyanatkomponente führen sie zu unerwünschten Nebenerscheinungen, und bei der Lagerung werden Zersetzung und Verharzung beobachtet. Auch Säuren, wie Salzsäure, Essigsäure und Trichloressigsäure, lassen sich aus toxikologischen Gründen in der Medizintechnik, wie z. B. beim Eingiessen von Hohlfaser- oder Flachfoliendialysatoren, nicht verwenden.

Stand der Technik

Aus diesem Grund wird gemäß der DE-OS 2 340 661 für solche Zwecke eine katalysatorfreie Polyurethanformmasse verwendet, damit diese keine toxikologisch bedenklichen Bestandteile enthält. Der Nachteil solcher Gießmassen ist aber, daß sie verhältnismäßig lange zur Aushärtung benötigen, die Härtung bei relativ hohen Temperaturen duchgeführt werden muß und die katalysatorfreie Härtung überhaupt nur mit bestimmten Zusammensetzungen der Formmassen durchführbar ist.

Es ist auch bereits bekannt, als Katalysatoren für Polyurethanformmassen physiologisch unbedenkliche Carbonsäuren zu verwenden. Gemäß der US-PS 3 629 168 wird hierzu Ölsäure gemäß Chemical Abstracts, Band 84, 1976, Ref. 61 474p Octansäure und gemäß der GB-PS 1 453 152 eine alkyl- oder alkoxysubstituierte Benzoesäure verwendet. Diese Katalysatoren ergeben jedoch relativ lange Entformungszeiten, was zu einem verminderten Ausstoß pro Tag führt.

Beschreibung der Erfindung

Die der Erfindung zugrundeliegende Aufgabe bestand somit darin, bei einem Verfahren zur katalytischen Aushärtung von Polyurethanformmassen zu Formlingen, die ungiftig und physiologisch unbedenklich sind und bei der Berührung mit Blut oder anderen Körperflüssigkeiten keine physiologisch bedenklichen Stoffe abgeben, die Entformbarkeit zu beschleunigen, d. h. möglichst schnell einen Härtegrad des Formlings zu erreichen, der sein Herausnehmen aus der Form ohne Gefahr von Deformationen gestattet.

Das erfindungsgemäße Verfahren zur katalytischen Aushärtung von Polyurethanformmassen, die Diisocyanate und Polyole und/oder Polyurethanvorpolymere mit Isocyanat-bzw. Hydroxylgruppen enthalten, mittels wenigstens einer physiologisch unbedenklichen Carbonsäure als Härtungskatalysator gegebenenfalls in physiologisch unbedenklicher Mischung mit einem schwermetallhaltigen Katalysator, ist dadurch gekennzeichnet, daß man als physiologisch unbedenkliche Carbonsäure Sorbinsäure oder Zimtsäure verwendet. Die Sorbinsäure, d.h. 2,4-Hexadiensäure, kann auch als intramolekulares Additionsprodukt, als Parasorbinsäure, zugesetzt werden.

Die erfindungsgemäß verwendeten Carbonsäuren sind ungiftig, geruchlos und nicht schaumbildend. Beispielsweise wird Sorbinsäure als Nahrungsmitteladditiv verwendet. Auch sind die erfindungsgemäß verwendeten Carbonsäuren in der Polyolkomponente löslich, was ihre Verarbeitung erleichtert.

Die Härtung mit Hilfe von Sorbinsäure oder Zimtsäure kann man bei Raumtemperatur, wie beispielsweise 18 bis 24°C, oder bei erhöhten Temperaturen, wie beispielsweise zwischen Raumtemperatur und 70°C, durchführen.

Die Sorbinsäure oder Zimtsäure kann entweder alleine oder zusammen mit schwermetallhaltigen Katalysatoren verwendet werden, sofern die Gemische der Carbonsäuren mit diesen schwermetallhaltigen Katalysatoren physiologisch unbedenklich sind. Als ein solcher schwermetallhaltiger Katalysator ist beispielsweise Eisenacetylacetonat oder Di-n-octylzinn-di-(thioglykolsäure-isooctylester) zu nennen. Uberraschenderweise bekommt man einen synergistischen Effekt der Carbonsäure mit solchen schwermetallhaltigen Katalysatoren, indem die Härtung schneller erfolgt, als durch den additiven Effekt beider Einzelkomponenten zu erwarten wäre.

Der Ausdruck Polyurethanvorpolymer wird hier in üblicher Weise verwendet. Solche Polyurethanvorpolymere werden gewöhnlich durch Umsetzung eines Überschusses eines organischen Diisocyanats der allgemeinen Formel

OCN—B—NCO,

worin B ein divalenter organischer Rest ist, mit einem Polyäther- oder Polyesterpolyol mit einem Molekulargewicht von etwa 400 bis 10 000, gewöhnlich von 600 bis 70000 und bevorzugt von 1000 bis 6000 unter Gewinnung des Vorpolymers mit NCO-Endgruppen hergestellt. Das Aquivalentverhältnis von Diisocyanat zu Polyol sollte größer als eins sein und ist vorzugsweise groß genug, daß das Polyurethanvorpolymer unterhalb 80°C schmilzt und vorzugsweise bei Raumtemperatur flüssig ist.

Bester Weg zur Ausführung der Erfindung

Unter den reaktiven organischen polyfunktionellen Polyolen, die bei der Herstellung der erfindungsgemäß verwendeten Polyurethanvorpolymere durch Umsetzung mit einer geeigneten Isocyanatverbindung verwendet werden, finden sich die Polyalkylenätherglycole der allgemeinen Formel

$$HO—(RX)_n—N$$

worin R gleiche oder verschiedene Alkylenreste mit bis zu etwa 10 Kohlenstoffatomen bedeutet, X Sauerstoff oder Schwefel bedeutet und n eine ganze Zahl ist, so daß das Molekulargewicht des Polyalkylenätherglycols wenigstens etwa 400 beträgt und beispielsweise bei etwa 400 bis etwa 10 000 liegt. Die Polyalkylenätherglycole gemäß dieser allgemeinen Formel, wie Polyäthylenglycole, Polypropylenglycole, Polybutylenglycole, Polytetramethylenglycole, Polyhexamethylenglycole und dergleichen, die man beispielsweise durch säurekatalysierte Kondensation der entsprechenden monomeren Glycole oder durch Kondensation niedermolekularer Alkylenoxide, wie Äthylenoxid, Propylenoxid und dergleichen, entweder mit sich selbst oder mit Glycolen, wie Äthylenglycol, Propylenglycol oder dergleichen, erhält, sind bevorzugt.

Polyalkylenarylenätherglycole, die auch hohe Molekulargewichte im Bereich von etwa 400 bis etwa 10 000 besitzen, sich aber von den oben beschriebenen Alkylenglycolen dadurch unterscheiden, daß sie Arylenreste, wie Phenylreste oder Naphthylenreste, oder gegebenenfalls substituierte Arylenreste, wie beispielsweise durch Alkylgruppen oder Arylgruppen oder dergleichen substituierte Arylenreste anstelle einiger der Alkylenreste in den Polyalkylenglycolen besitzen, können ebenfalls als Polyolreaktionspartner verwendet werden. Polyalkylenarylenglycole des gewöhnlich für diesen Zweck verwendeten Typs enthalten üblicherweise wenigstens einen Alkylenätherrest mit einem Molekulargewicht von etwa 500 pro vorhandenen Arylenrest.

Im wesentlichen lineare Polyester, die mehrere isocyanatreaktive Hydroxylgruppen enthalten, stellen eine andere Klasse reaktiver organischer polyfunktioneller Polyole dar, die bei der Herstellung von Polyurethan verwendet werden können, das bei der vorliegenden Erfindung brauchbar ist. Obwohl die Herstellung von Polyestern, die für diesen Zweck geeignet sind, nach dem Stand der Technik bereits in allen Einzelheiten beschrieben wurde und ansich nicht Teil der vorstehenden Erfindung bildet, kann hier doch zur Erläuterung erwähnt werden, daß Polyester dieses Typs durch die Kombination des mehrwertigen Alkohols, allgemein eines gesättigten aliphatischen Diols, wie Äthylenglycol, Propandiol-1,2, Propandiol-1,3, Butandiol-1,3, Butandiol-1,4, Pentandiol-1,2, Pentandiol-1,5, Hexandiol-1,3, Hexandiol-1,6, Diäthylenglycol, Dipropylenglycol, Triäthylenglycol, Tetraäthylenglycol und dergleichen sowie von Gemischen solcher Diole miteinander oder mit kleineren Mengen von Polyolen mit mehr als zwei Hydroxylgruppen, vorzugsweise gesättigten aliphatischen Polyolen, wie Glycerin, Trimethylolmethan, Trimethylolpropan, Pentaerythrit, Sorbit und dergleichen, mit einer Polycarbonsäure oder einem Anhydrid einer solchen, allgemein einer Dicarbonsäure oder deren Anhydrid, und zwar entweder einer gesättigten oder einer solchen, die nur benzoide Ungesättigtheit enthält, wie Oxalsäure, Malonsäure, Bernsteinsäure, Glutarsäure, Adipinsäure, Pimelinsäure, Suberinsäure, Apfelsäure, Azelainsäure, Sebacinsäure, Phthalsäure, Cyclohexandicarbonsäure, Sebacinsäure, Phthalsäure, Cyclohexandicarbonsäure und Endomethylentetrahydrophthalsäuren und dergleichen sowie ihrer Isomerer, Homologen und anderer substituierter Derivate, wie der Chlorderivate, oder mit Gemischen solcher Säuren entweder mit sich selbst oder mit ungesättigten Dicarbonsäuren oder Anhydriden derselben, wie mit Maleinsäure, Fumarsäure, Citraconsäure und Itaconsäure oder dergleichen, sowie mit Polycarbonsäuren mit 3 oder mehr Carboxylgruppen, wie Aconitsäure und dergleichen, hergestellt werden können.

Die im wesentlichen linearen oder verzweigtkettigen Polyester, die gewöhnlich bei der Herstellung von Polyurethanharzen verwendet werden, haben vorzugsweise Molekulargewichte im Bereich von etwa 750 bis 3000. Ausserdem haben sie allgemein relativ niedrige Säurezahlen, wie Säurezahlen, die nicht wesentlich oberhalb 60 liegen, und vorzugsweise solche, die so niedrig sind, wie praktisch erhalten werden kann, wie beispielsweise 2 oder weniger. Entsprechend haben sie allgemein relativ hohe Hydroxylzahlen, wie solche von etwa 30 bis etwa 700. Bei der Herstellung dieser Polyester wird allgemein ein Überschuß an Polyol gegenüber Polycarbonsäure verwendet, um zu gewährleisten, daß die resultierenden im wesentlichen linearen Polyesterketten eine ausreichende Menge reaktiver

Hydroxylgruppen enthalten.

Eine andere Klasse geeigneten organischer polyfunktioneler Polyolreaktionspartner schließt Polyalkylenätherpolyole mit mehr als zwei reaktiven Hydroxylgruppen, wie Polyalkylenäther-triole, -tetrole und dergleichen ein, die beispielsweise durch Umsetzung von Polyolen, wie Glycerin, Trimethyloläthan, Trimethylolpropan, Pentaerythrit, Dipentaerythrit, Sorbit und dergleichen, mit niedermolekularen, Alkylenoxiden, wie Äthylenoxid, Propylenoxid und dergleichen, hergestellt werden.

Auch Rizinusoele und Polyole auf Rizinusbasis, wie sie z. B. durch chemische Modifizierung aus Risinusoel erhalten werden (vg. Patton et al, Gummi, Asbest, Kunststoffe, 14 (1961), S. 918 ff.) kommen als Polyolkomponente in Frage.

Wie leicht ersichtlich ist, können auch Gemische der verschiedenen reaktiven organischen polyfunktionellen Polyole, die oben beschrieben wurden, bei der Herstellung von Polyurethanvorpolymeren verwendet werden, die für die vorliegende Erfindung brauchbar sind.

Die Polyesterpolyole oder Polyätherpolyole, die oben beschrieben wurden, können mit einem leichten Überschuß irgendeines aus einer großen Zahl von Polyisocyanaten kombiniert werden, um das Polyurethanvorpolymer zu bilden. Wie oben gesagt, kann das Polyisocyanat bequemerweise durch die Formel

OCN—B—NCO

wiedergegeben werden, worin B einen divalenten organischen Rest bedeutet und aliphatischer, aromatischer oder aliphatisch-aromatischer Natur sein kann. So kann der divalente bzw. zweibindige Rest B ein Phenylrest sein, der unsubstituiert oder durch Chloratome, Nitrogruppen, niedermolekulare Alkoxygruppen, niedermolekulare Alkylgruppen, Phenoxygruppen oder Phenylreste substituiert sein kann, ein Diphenylenrest sein, der unsubstituiert oder durch niedermolekulare Alkylgruppen oder niedermolekulare Alkoxygruppen substituiert sein kann, ein Bis-phenylenniederalkylenrest sein, der unsubstituiert oder durch niedermolekulare Alkoxygruppen substituiert sein kann, ein Halogenalkylenrest mit 2 bis 8 Kohlenstoffatomen sein, der unsubstituiert oder durch niedermolekulare Alkoxygruppen substituiert sein kann, ein Cycloalkylenrest mit 4 bis 8 Kohlenstoffatomen sein, der unsubstituiert oder durch niedermolekulare Alkylgruppen substituiert sein kann, oder ein Bis-cyclohexylenniederalkylenrest sein.

Zweibindige organische Reste B können durch verschiedene Substituenten substituiert sein, wie beispielsweise durch niedermolekulare Alkoxygruppen, durch niedermolekulare Alkylgruppen, Phenylreste oder Phenoxyreste. Repräsentative Polyisocyanate sind beispielsweise:

1-Methoxyphenyl-2,4-diisocyanat, 1-Methyl-4-methoxyphenyl-2,5-diisocyanat, 1-Äthoxyphenyl-2,4-diisocyanat, 1,3-Dimethoxyphenol-4,6-diisocyanat, 1,4-Dimethylphenyl-2,5-diisocyanat, 1-Propoxyphenyl-2,4-diisocyanat, 1-Isobutoxyphenyl-2,4-diisocyanat, 1,4-Diäthoxyphenyl-2,5-diisocyanat, Toluol-2,4-diisocyanat, Toluol-2,6-diisocyanat, Diphenyläther-2,4-diisocyanat, Naphthalin-1,4-diisocyanat, 1,1'-Dinaphthalin-2,2-diisocyanat, Biphenyl-2,4-diisocyanat, 3,3'-Dimethylbiphenyl-4,4'-diisocyanat, 3,3'-Dimethoxybiphenyl-4,4'-diisocyanat, Diphenylmethan-4,4'-diisocyanat, Diphenylmethan-2,4'-diisocyanat, Diphenylmethan-2,2'-diisocyanat, 3,3'-Dimethoxydiphenylmethan-4-4'-diisocyanat, Benzophenon-3,3'-diisocyanat, Äthylen-diisocyanat, Propylen-diisocyanat, Butylen-diisocyanat, Pentylen-diisocyanat, Methylbutylen-diisocyanat, Tetramethylen-diisocyanat, Pentamethylen-diisocyanat, Hexamethylen-diisocyanat, Dipropyldiisocyanatäther, Heptamethylen-diisocyanat, 2,2-Dimethylpentylen-diisocyanat, 3-Methoxy-hexamethylen-diisocyanat, Octamethylen-diisocyanat, 2,2,4-Trimethylpentylen-diisocyanat, 3-Butoxyhexamethylen-diisocyanat, 1,3-Dimethyl-diisocyanat, 1,4-Dimethylbenzol-diisocyanat, 1,2-Dimethylcyclohexan-diisocyanat, 1,4-Dimethylcyclohexan-diisocyanat, 1,4-Diäthylbenzol-diisocyanat, 1,4-Dimethylnaphthalin-diisocyanat, 1,5-Dimethylnaphthalin-diisocyanat, Cyclohexan-1,3-diisocyanat, Cyclohexan-1,4-diisocyanat, 1-Methylcyclohexan-2,4-diisocyanat, 1-Methylcyclohexan-2,5-diisocyanat, 1-Äthylcyclohexan-2,4-diisocyanat, Dicyclohexylmethan-4,4'-diisocyanat, Dicyclohexylmethylmethan-4,4'-diisocyanat, Dicyclohexyldimethylmethan-4,4'-diisocyanat, 2,2-Dimethyldicyclohexylmethan-4,4'-diisocyanat, 3,3',5,5'-Tetramethyldicyclohexylmethan-4,4'-diisocyanat, 4,4'-Methylen-bis-cyclohexylisocyanat; Äthylidin-diisocyanat; Propylen-1,2-diisocyanat; 4,4'-Diphenyl-diisocyanat; Dianisidin-diisocyanat; 1,5-Naphthalin-diisocyanat; 4,4'-Diphenyläther-diisocyanat; m- und p- Phenylen-diisocyanat; 4,4'-Toluidin-diisocyanat; Isopropyliden-bis-[phenyl- oder cyclohexyl-isocyanat]; 1,3-Cyclopentylen-diisocyanat; 1,3-Cyclohexylen-diisocyanat; 1,4-Cyclohexylen-diisocyanat; Chlor-diphenyldiisocyanat; 4,4',4''-Triphenylmethan-triisocyanat; 1,3,5-Triisocyanat-benzol oder Phenyläthylendiisocyanat.

Die Mengen der erfindungsgemäß zugesetzten Härtungskatalysatoren liegen gewöhnlich bei 0,1—3,0 0/0, vorzugsweise zwischen 0,4 und 1,0 0/0 der Formmasse. Die Zeit, nach welcher die aushärtende Mischung bei Umgebungstemperatur oder bei erhöhter Temperatur (ca. 40°C) "Shore A-Härtewerte" zwischen 20 und 30 erreicht und dann aus der Form genommen werden kann, ist abhängig von der Katalysator-Konzentration, der Masse und der Art des Polyurethan-Systems. Sie liegt für kleine Massen zwischen 10 und 50 g zwischen wenigen Minuten und 2 Stunden, wie z. B. zwischen 15 und 30 Minuten. Die Endhärten dieser Gießmassen werden bei Raumtemperatur in Zeiten zwischen mehreren Stunden und mehreren Tagen erreicht.

Gewerbliche Verwertbarkeit

Das erfindungsgemäße Verfahren kann zur Herstellung in der Medizin verwendbarer Gegenstände, wie zum Eingießen und Verbinden der Einzelteile von Dialyse- und Diafiltrationseinrichtungen, angewendet werden. Da die für die Entformung erforderliche Härte relativ rasch erreicht wird, läßt sich mit diesem Verfahren ein hoher Produktausstoß erreichen.

Ausführunbgsbeispiele

Beispiele 1 und 2 und Vergleichsbeispiele

64 Teile katalysatorhaltiger Polyolkomponente, bestehend aus 90% Rizinusöl, 10% Polyäther (Molekulargewicht 2600) und 0,5% der zu prüfenden Säure, wurden mit 36 Teilen Diphenylmethan-4,4'-diisocyanat-Polyäther-Präpolymer gemischt und die Mischung im Vakuum entgast. Es wurden jeweils 40 g-Proben in Papierbecher gegossen und bei 40°C gehärtet. Bei dieser Temperatur wurde nach 30 Minuten die Shore-A-Härte gemessen. Für die Entfernung wurde eine Shore-A-Härte als kritisch angesehen.

Bei Oktan- und Ölsäure wurde starke Schaumbildung beobachtet. Dies erklärt auch die niedrigen Endhärten. Kaum zu Blasenbildung führten Sorbinsäure und o-Tolylsäure.

| | Katalysator | Shore-A-Härte nach 30 Minuten |
|---|---|---|
| Beispiel 1 | Sorbinsäure | 27 |
| Beispiel 2 | Zimtsäure | 25 |
| Vergl.beispiel 1 | Ölsäure | nicht meßbar |
| „ 2 | Oktansäure | 15 |
| „ 3 | 2-Methoxybenzoesäure | nicht meßbar |
| „ 4 | o-Tolylsäure | 22 |
| „ 5 | m-Tolylsäure | 20 |
| „ 6 | p-Tolylsäure | 15 |

Die Werte in der Tabelle zeigen, daß nach 30 Minuten nur Sorbinsäure mit Zimtsäure den für die Entformung kritischen Wert von 25 erreicht hatten.

**Patentansprüche**

1. Verfahren zur katalytischen Aushärtung von Polyurethanformmassen, die Diisocyanate und Polyole und/oder Polyurethanvorpolymere mit Isocyanat- bzw. Hydroxylgruppen enthalten, mittels einer physiologisch unbedenklichen Carbonsäure als Härtungskatalysator, gegebenenfalls in physiologisch unbedenklicher Mischung mit einem schwermetallhaltigen Katalysator, dadurch gekennzeichnet, daß man als physiologisch unbedenkliche Carbonsäure Sorbinsäure oder Zimtsäure verwendet.

2. Verfahren nach Anspruch 1, dadurch gekennzeichnet, daß man die Sorbinsäure oder Zimtsäure in einer Menge von 0,1 bis 3,0 Gewichts-% der Formmasse verwendet.

3. Verfahren nach Anspruch 1 und 2, dadurch gekennzeichnet, daß man die Aushärtung bei erhöhter Temperatur, vorzugsweise zwischen Umgebungstemperatur und 70°C durchgeführt.

**Revendications**

1. Procédé pour le durcissement catalytique de masses moulables de polyuréthane qui contiennent des diisocyanates et des polyols et/ou des prépolymères de polyuréthane avec des groupes isocyanate ou respectivement hydroxyle, au moyen d'un acide carboxylique neutre physiologiquement en tant que catalyseur de durcissement, éventuellement en mélange neutre physiologiquement avec un catalyseur contenant un métal lourd, caractérisé en ce qu'on utilise de l'acide sorbique ou de l'acide cinnamique comme acide carboxylique neutre physiologiquement.

2. Procédé suivant la revendication 1, caractérisé en ce qu'on utilise l'acide sorbique ou l'acide cinnamique dans une quantité allant de 0,1 à 3,0% en poids de la masse moulable.

3. Procédé suivant les revendications 1 et 2, caractérisé en ce qu'on effectue le durcissement à une température élevée, de préférence entre la température ambiante et 70°C.

**Claims**

1. Process for the catalytic setting of polyurethane molding compositions, which contain diisocyanates and polyols and/or polyurethane prepolymers with isocyanate or hydroxyl groups, by means of a physiologically acceptable carboxylic acid as setting catalyst, optionally in a physiologically acceptable mixture with a heavy-metal containing catalyst, characterized by the fact that sorbic acid or cinnamic acid is used as the physiologically acceptable carboxylic acid.

2. Process according to Claim 1, characterized by the fact that the sorbic acid or cinnamic acid is used in an amount of 0.1 to 3.0 weight percent of the molding composition.

3. Process according to Claims 1 and 2, characterized by the fact that the setting is carried out at an elevated temperature, preferably between ambient temperature and 70°C.